# EUROPEAN PATENT SPECIFICATION

(11) **EP 0 694 721 B1**
(45) Date of publication and mention of the grant of the patent: **24.11.1999**
(21) Application number: 95305181.0
(22) Date of filing: 25.07.1995
(51) Int. Cl.: F16K 27/02

(54) **Mixer for water supply installations**
Mischer für Wasserversorgungsinstallationen
Robinet mélangeur pour installations de distribution d'eau

(30) Priority: 26.07.1994 GB 9415061
(43) Date of publication of application: 31.01.1996
(73) Proprietor: CARADON MIRA LIMITED, Cheltenham Gloucestershire GL52 5EP (GB)
(72) Inventor: Weaver, John Martyn, Gloucestershire, GL5 5DP (GB); North, Royston, Gloucestershire, GL52 4AD (GB); Keylock, John, Glouchestershire (GB); Burke, Christopher, Glouchestershire, GL20 8RG (GB)
(74) Representative: Wightman, David Alexander

(56) References cited:
- EP-A- 0 323 725
- DE-A- 2 209 417
- DE-A- 2 633 548
- DE-A- 3 531 935
- DE-B- 2 548 650
- DE-B- 2 648 091
- US-A- 5 146 951

## Description

This invention relates to mixers for water supply installations, particularly but not exclusively, for mixing hot and cold water for ablutionary showers.

It is already known to house the operating mechanism for such mixers in a cartridge that is detachably mounted in the mixer body so that the cartridge can be removed and replaced if any malfunction arises in service.

There are many types of installations having different connections to the mixer body. The cartridge is required to match these connections with the result that cartridges are not interchangeable between the different styles of mixer body required for each type of installation. The production of many different cartridges adds to manufacturing costs.

Furthermore, the cartridge can be difficult to remove due to the friction of the seals and the build up of lime and scale deposits so that considerable force is required which may result in damage to the mixer body.

Additionally, there is a risk of the operating mechanism being damaged by excessive travel of the drive for adjustable selection of the water temperature. This is a particular problem in thermostatic mixers when the maximum water temperature is being set during installation.

DE-25 48 650-B (& GB 1 498 638) discloses a mixer tap having a cartridge defining with the tap body an outlet chamber at the inner end of the cartridge, and the cartridge is axially movable in the tap body to vary the rate of flow from an axial outlet in the cartridge to a radial outlet in the tap body.

DE-35 31 935-A discloses a mixer tap having an outlet spout rotatable on the tap body and a cartridge having an annular channel intermediate the ends which defines with the spout an outlet chamber for mixed water in communication with the spout for all angular positions of adjustment of the spout.

DE-26 48 091-B discloses a mixer tap having a cartridge with a radial outlet intermediate the ends for mixed water which communicates with an annular outlet chamber in the tap body connected to an outlet spout.

The present invention has been made from a consideration of the foregoing disadvantages of the known mixers.

According to the present invention there is provided a mixer comprising a body having hot and cold water inlets for connection to hot and cold water supplies respectively and a mixed water outlet, and a cartridge received in the body, the cartridge having hot and cold water inlet ports in communication with the hot and cold water inlets respectively of the body and a mixed water outlet port which is in communication with the mixed water outlet of the body through an outlet chamber characterised in that the outlet chamber is defined by axial and radial clearance between the cartridge and side and end walls of the body.

The invented arrangement of the outlet chamber between the body and the cartridge enables the position of the outlet in the body to be altered for different types of installation without changing the cartridge. In this way, the same cartridge can be used where previously a different cartridge was required for each position of the outlet in the body.

Preferably, the mixed water outlet port of the cartridge is spaced from and faces the end wall of the body, and the mixed water outlet of the body is conveniently provided in either the end wall or side wall of the body.

Advantageously, the cartridge is spaced from the end wall of the body providing axial clearance and is spaced from the side wall of the body between the hot and cold water inlet ports providing radial clearance.

Preferably, the body has a bore of circular cross-section for reception of the cartridge with an annular seal between the cartridge and the body at the open end of the bore.

Advantageously, the hot and cold water inlets of the cartridge are of increased size relative to the hot and cold water inlets of the body, and the cartridge and body preferably have co-operating formations for locating the cartridge in a selected one of two opposed positions for reversing the inlet connections to the hot and cold supplies.

Preferably, the cartridge is secured in the body by retainer means which is conveniently releasable for removing the cartridge from the body and may be connectable to the cartridge for applying an axial force to withdraw the cartridge from the body when the retainer means is released.

For example, the retainer means may be threadably engageable with the body with the coupling means arranged to engage an annular groove in the cartridge allowing relative rotation between the retainer means and the cartridge. The coupling means may also be detachable for disconnecting the retainer means and cartridge.

By this arrangement, the coupling means facilitates removal of the cartridge, especially after many years of the service, by causing the cartridge to be jacked out of the body when the retainer means is unscrewed from the mixer body.

Advantageously, the cartridge includes a proportioning valve for controlling the relative proportions of hot and cold water admitted to a mixing chamber in accordance with adjustable selection of the mixed water temperature.

Preferably, the proportioning valve is actuated by drive means conveniently arranged for axial movement in response to selection of the mixed water temperature.

Advantageously, the drive means is arranged to be disconnected to limit axial movement for setting the maximum mixed water temperature. Disconnecting the drive means prevents the operating mechanism being overloaded by excessive travel of the drive means.

Advantageously, a thermostat responsive to temperature of water in the mixing chamber is arranged to adjust the proportioning valve to maintain constant the selected mixed water temperature. The thermostat is preferably arranged to be isolated for adjustable selection of the mixed water temperature below a pre-determined value.

Various other features, benefits and advantages of the invention will be apparent from the following description of exemplary embodiments of the invented mixer with reference to the accompanying drawings wherein:-
FIGURE 1 is a side view of a mixer cartridge embodying the invention;
FIGURE 2 is a longitudinal view, partly in section, of the mixer cartridge shown in Figure 2;
FIGURE 3 is rear end view of the mixer cartridge shown in Figures 1 and 2;
FIGURE 4 is a front view of a first embodiment of a thermostatic mixer incorporating the cartridge shown in Figures 1 to 3;
FIGURE 5 is a side view of the mixer shown in Figure 4;
FIGURE 6 is a longitudinal view, partly in section, of the mixer shown in Figures 4 and 5;
FIGURE 7 is a front view similar to Figure 4 with parts removed to show the cartridge removal tool; and
FIGURE 8 is a longitudinal view, partly in section, of a second embodiment of a thermostatic mixer incorporating the cartridge shown in Figures 1 to 3.

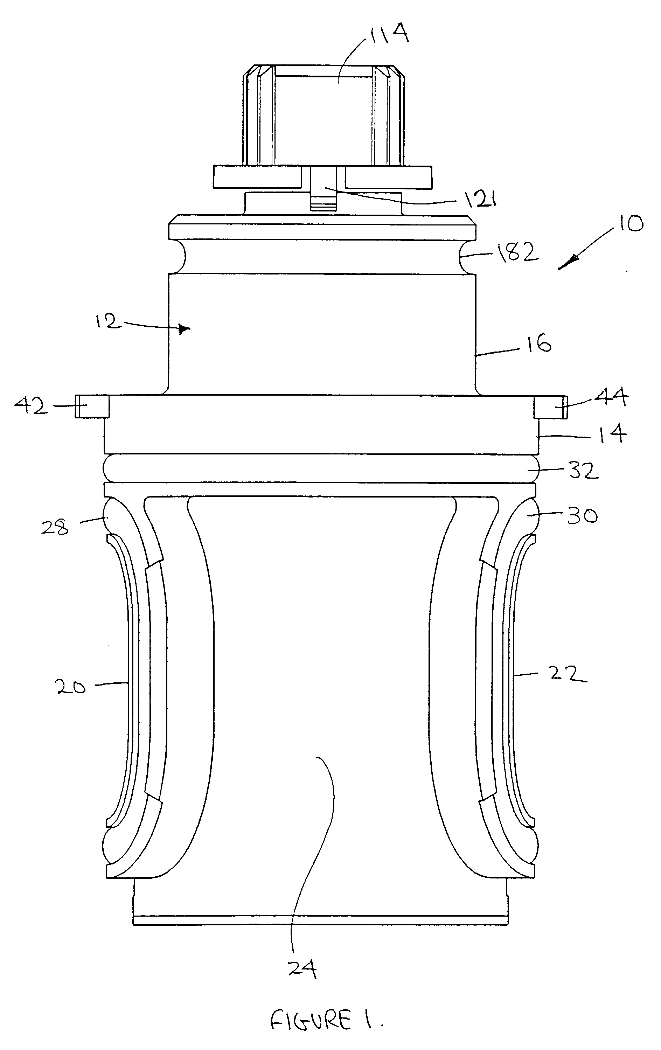

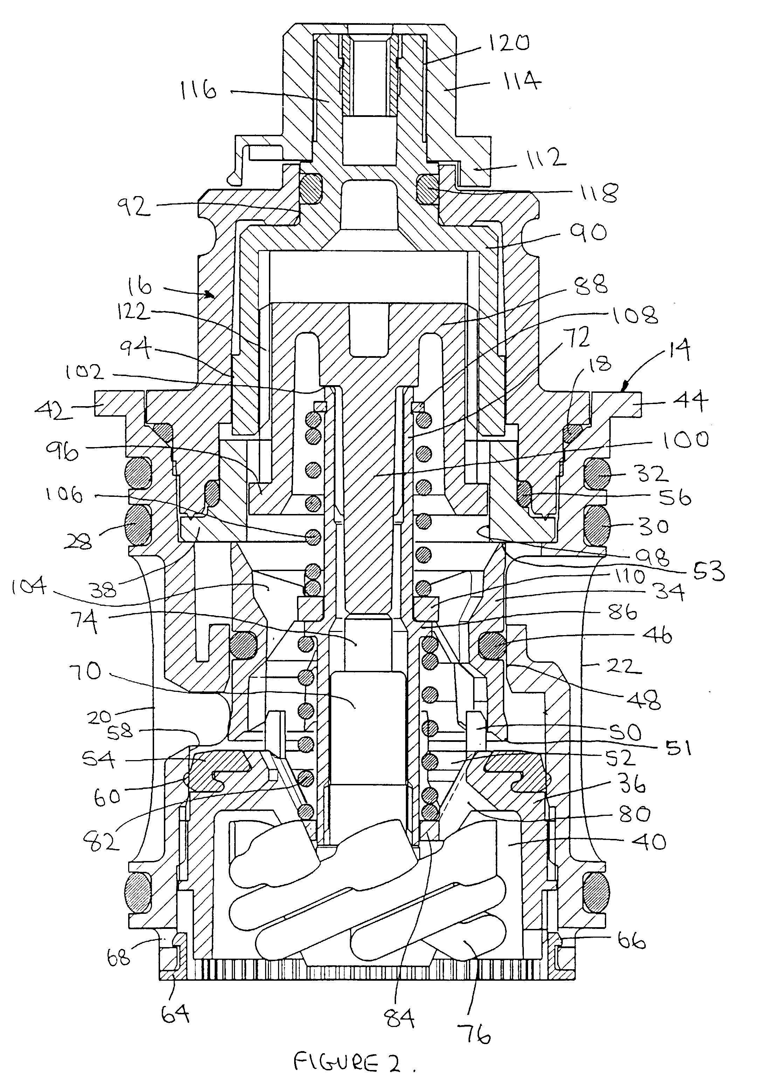

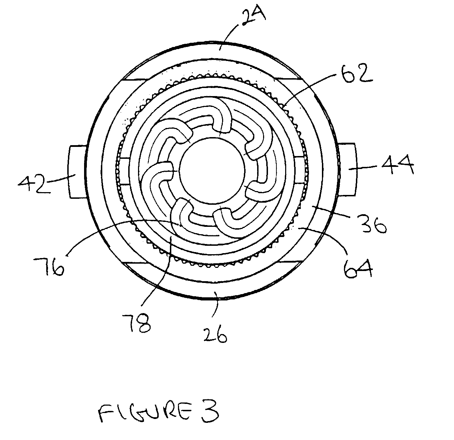

Referring first to Figures 1 to 3 of the drawings, a cartridge 10 for a mixer is shown having an outer shell 12 comprising a bottom part 14 and top part 16 being mouldings of suitable plastics welded or bonded together with an O-ring 18 therebetween.

The bottom part 14 is generally cylindrical with opposed hot and cold water inlet ports 20 and 22 respectively for connection to supplies of hot and cold water respectively and opposed external recesses 24,26 extending axially to the rear end of the cartridge for a purpose to be described later. Each inlet port 20,22 is provided with a peripheral O-ring 28,30 respectively for sealing the inlet connections and the bottom part 14 has a circumferential O-ring 32 for sealing the cartridge 10 in the mixer.

The inlet ports 20,22 are in communication with opposite ends of a shuttle 34 which acts as a proportioning valve and is axially movable between hot and cold seats 36 and 38 respectively for controlling the relative proportions of hot and cold water admitted to a mixing chamber 40 at the rear end of the cartridge 10. The bottom part 14 has opposed lugs 42,44 for locating the cartridge 10 in the mixer and these are colour coded or otherwise marked to identify the hot and cold ports 20,22 for connection to the hot and cold supplies.

The shuttle 34 has a circumferential O-ring 46 intermediate its ends in sealing engagement with an internal wall 48 of the bottom part 14 to separate the hot and cold inlet ports 20,22 and is prevented from rotating in turbulent flow conditions by engagement with circumferentially spaced axial guides 50 bordering an opening 52 through the hot seat 36 into the mixing chamber 40.

Each end of the shuttle 34 is tapered to provide annular seal faces 51,53 having a small contact seal area that co-operates with the hot and cold seats 36,38 respectively to break up any deposits and prevent build-up of scale or debris on the seats.

The hot seat 36 has a seating member 54 of resilently deformable material that is resiliently deformable on application of sealing loads to assist in loosening or dislodging any deposits and ensure that the hot flow is completely shut-off if the cold water supply should stop for any reason.

The cold seat 38 is axially located between the top part 16 and the bottom part 14 on assembly of the shell 12 and is sealed against the top part 16 by an O-ring 56. The hot seat 36 screws into the bottom part 14 to adjust the axial movement available to the shuttle 34 for controlling the total of the hot and cold flow rates and is sealed against an internal wall 58 of the bottom part 14 by a circumferential lip 60 of the seating member 54.

The axial position of the hot seat 36 is set during assembly and is fixed by interlocking serrations 62 of the hot seat 36 and a hot seat cap 64 permanently secured to the bottom part 14 by circumferentially spaced ears 66 arranged to snap into aligned radial openings 68 in the bottom part 14 to prevent unauthorised removal of the cap 64. In a modification (not shown), the cap 64 may permit rotation of the hot seat 36 so that the flow rate can be adjusted between upper and lower limits to suit the system pressure during installation.

A wax filled thermostat 70 is screwed into the end of a brass tube 72 and has an actuator rod 74 projecting from one end within the tube 72. The end of the thermostat 70 remote from the rod 74 is positioned in the mixing chamber 40 and is provided with temperature sensing coils 76 arranged in the water flow path through the mixing chamber 40 to an annular outlet port 78 in the hot seat cap 64 at the rear end of the cartridge 10. With this arrangement, the response of the thermostat 70 to changing hot water temperature is optimised by minimising the transport distance for the mixed water to reach the sensing coils 76 and by siting the coils 76 very close to the hot water inlet port 20.

The tube 72 extends axially through a slotted guide support 80 in the hot seat opening 52 with a return spring 82 mounted between a centre core 84 of the guide support 80 and one side of an external collar 86 intermediate the ends of the tube 72. The return spring 82 applies an axial force to bias the tube 72 towards a hollow drive nut 88 screwed into a temperature control spindle 90 mounted for rotation in the top part 16 of the shell 12 by wide spaced bearing surfaces 92,94 giving precision rotation without a wobbly feel. The drive nut 88 has an external hexagonal flange 96 received in a complementary hexagonal bore 98 in the cold seat 38 so that the drive nut 88 is prevented from rotating when the control spindle 90 is turned but is caused to move axially.

The projecting length of the actuator rod 74 is controlled by expansion/contraction of the wax filler in response to the water temperature sensed by the thermostat coils 76 and is chosen so that the rod 74 engages an axially extending post 100 of the drive nut 88 when the temperature reaches a pre-determined value, for example 25°C. At lower temperatures, the rod 74 is clear of the post 100 and the free end of the tube 72 engages an abutment shoulder 102 on the post 100 under the biasing of the return spring 82 so that the axial position of the tube 72 is controlled by adjustment of the drive nut 88 independently of the thermal response of the actuator rod 74, i.e. the thermostat 70 is isolated. At higher temperatures, the free end of the tube 72 is lifted clear of the shoulder 102 against the biasing of the return spring 82 by engagement of the rod 74 with the post 100 so that the axial position of the tube 72 is controlled by adjustment of the drive nut 88 and by thermal response of the actuator rod 74, i.e. the thermostat 70 is live.

The shuttle 34 is located on the tube 72 by an internal spider support 104 with an overload spring 106 mounted between a retainer ring 108 at the free end of the tube 72 and a centre core 110 of the spider 104. The spring 106 applies an axial force to bias the shuttle 34 towards the other side of the external collar 86 remote from the thermostat 70 so that the shuttle 34 moves with the tube 72 between the hot and cold seats 36,38 to vary the relative proportions of hot and cold water admitted to the mixing chamber 40 in response to axial movement of the tube 72, and the spring 106 is compressed under temperature overshoot conditions when the shuttle 34 engages the hot seat 36.

The shuttle 34, hot seat 36 and thermostat 70 form a self-contained unit for pre-assembly that allows the biasing springs 82,106 to be compressed prior to insertion in the cartridge body 12 thereby facilitating assembly. Also, the continuous stress created by the springs 82,106 is contained by the brass tube 72 leaving only low stresses in the plastics parts.

As will be appreciated, the above arrangement provides for non-thermostatic control of the selected water temperature below the predetermined value when the thermostat 70 is isolated so that the water temperature may vary from that selected due to changes in the temperature and/or pressure of the supplies and/or the outlet pressure, and thermostatic control of the selected water temperature at or above the pre-determined value when the thermostat 70 is live so that the shuttle 34 is adjusted by thermal response of the actuator rod 74 to maintain constant the selected water temperature to compensate for changes in the temperature and/or pressure of the supplies and/or the outlet pressure.

The maximum water temperature that can be selected is controlled by a stop (not shown) on the top part 16 of the shell 12 that is engaged by a stop 112 on a hub 114 mounted on a stem 116 of the control spindle 90 that projects through an opening in the top part 16 and is sealed by an O-ring 118. The hub 114 and stem 116 have interlocking axial serrations 120 for adjusting the angular position of the hub 114 to set the maximum water temperature and the hub 114 is axially retained by a clip 121.

To prevent the thermostat 70 being overloaded when setting the stop 112, the interengageable screw threads 122 on the control spindle 90 and drive nut 88 are arranged to come out of engagement at the extreme of travel. In an alternative arrangement, the flange 96 on the drive nut 88 is arranged to come out of the bore 98 in the cold seat 38 at the extreme of travel to prevent the thermostat 70 being overloaded. Whichever method is employed to disconnect the drive nut 88, the drive nut 88 automatically re-engages under the biasing of the return spring 82 on reversing the rotation of the control spindle 90.

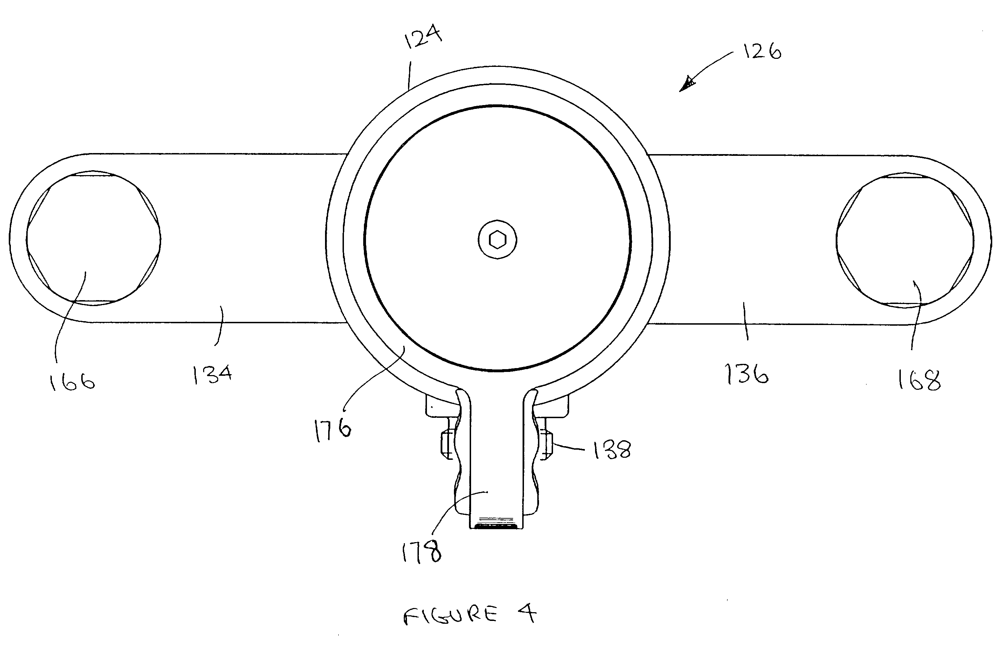

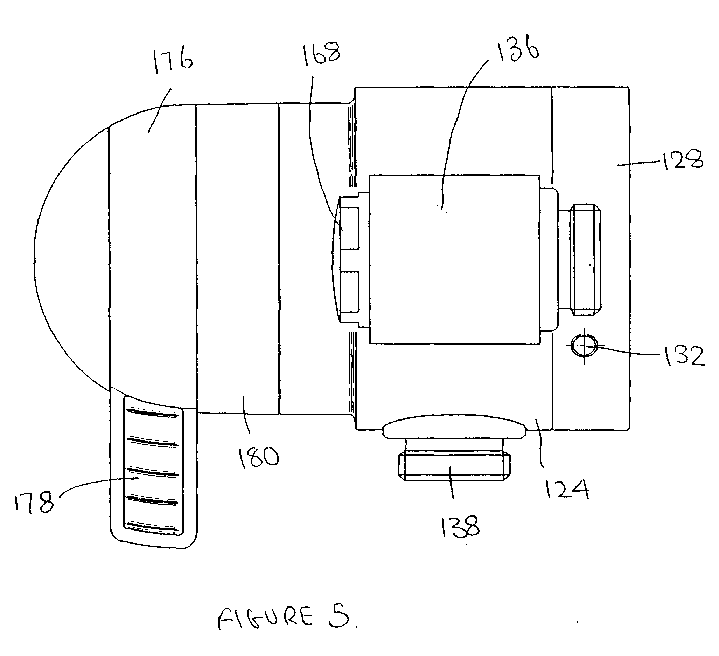

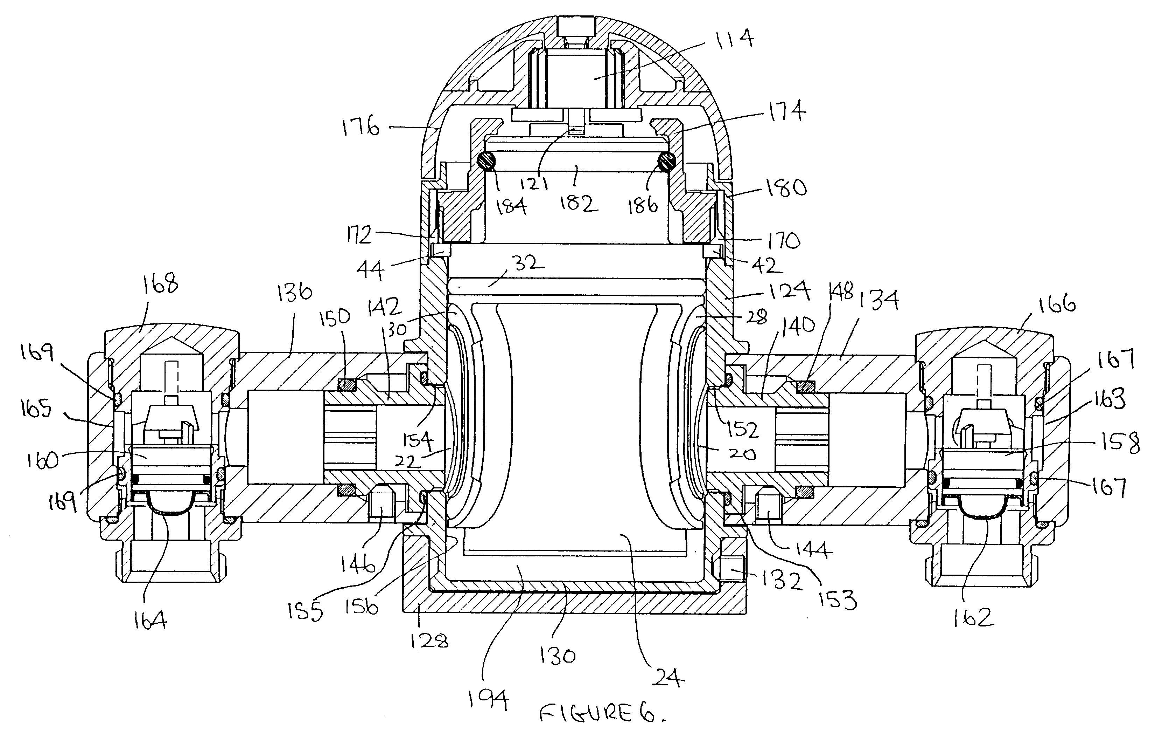

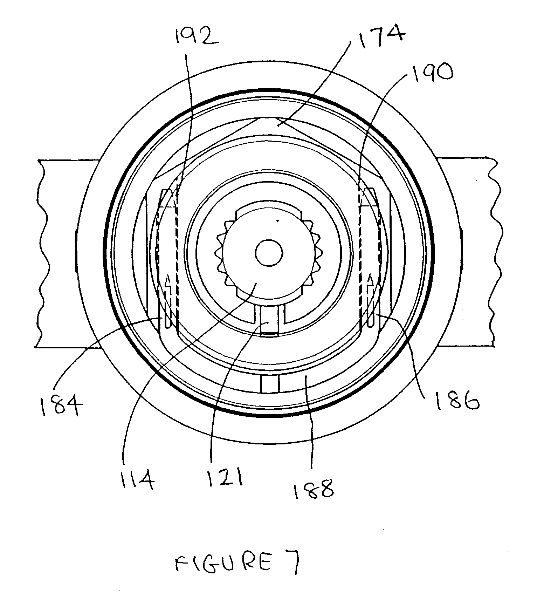

Referring now to Figures 4 to 7 of the drawings, the cartridge 10 above-described is shown fitted in a cylindrical metal body 124 of a mixer 126. In this way, the desired characteristics of strength and durability are retained by the use of the metal body 124 whilst the complex detail is built into the cartridge 10 which can employ plastics parts that are generally easier and cheaper to make. The body 124 may be made of brass with any suitable finish as desired, for example chrome plating.

The mixer 126 is adapted for wall mounting by means of a backplate 128 secured to the end wall 130 of the body 124 by a grub screw 132 with inlet elbows 134,136 on either side of the body 124 arranged for back connection to supplies of hot and cold water (not shown) and an outlet 138 at the bottom of the body 124 for connection to an ablutionary appliance such as a shower by suitable means (not shown). It will be understood that this is not essential, however, and that other arrangements for connection to the inlets and outlet may be applied to suit the requirements of different installations.

Each of the inlet elbows 134,136 is secured to a respective inlet adaptor 140,142 by a grub screw 144,146 and sealed by an O-ring 148,150. Each inlet adaptor 140,142 is screwed into a respective one of two opposed inlets 152,154 in the cylindrical wall 156 of the body 124 and sealed by an O-ring 153,155. The outlet 138 is in the same plane as the inlets 152,154 and at right angles thereto.

A non-return inlet valve 158,160 to prevent back-flow and an inlet strainer 162,164 to remove detritus are mounted in a respective head nut 166,168 that is screwed into a transverse bore 163,165 at the end of each elbow 134,136 and sealed by a pair of O-rings 167,169 whereby each head nut 166,168 with its non-return valve 158,160 and strainer 162,164 can be removed in one piece for service/inspection.

The cartridge 10 is a push-fit in the body 124 with the locating lugs 42,44 engaging axial slots 170,172 at the front end of the body 124 to position the cartridge 10 with the opposed hot and cold water inlet ports 20,22 aligned with the inlets 152,154 in the body 124 and the O-rings 28,30 in sealing engagement with the cylindrical wall 156 of the body 124 to seal the inlet connections. As mentioned previously, the inlet ports 20,22 are identified by colour coding or markings on the lugs 42,44 and the cartridge 10 can be fitted in a selected one of two orientations to suit the connections of the hot and cold water supplies to the inlets 152,154 in the body 124. The inlet ports 20,22 are also much larger than the inlets 152,154 allowing the position of the inlets 152,154 in the body 124 to be varied if desired.

The cartridge 10 is retained by a head nut 174 screwed into the front end of the body 124 and a temperature control knob 176 with a handle 178 is mounted on the hub 114 for rotation of the temperature control spindle 90 to select the desired water temperature. An annular trim 180 covers an exposed part of the cartridge 10 behind the control knob 176 and the control knob 176 is provided with an indicia (not shown) for indicating the selected temperature against a temperature scale (not shown) provided on the trim 180.

To facilitate removal of the cartridge 10 from the body 124, in particular to overcome the friction due to the seals 28,30 and 32, the top part 16 of the cartridge 10 has an annular groove 182 arranged to received the limbs 184,186 of a U-shaped member 188 inserted through transverse slots 190,192 in the head nut 174 so that the cartridge 10 and head nut 174 are axially locked together whilst permitting relative rotation causing the cartridge 10 to be lifted out of the body 124 as the head nut 174 is rotated to disengage the body 124.

When the cartridge is fitted, the outlet 138 opens into a clearance space formed between the cylindrical wall 156 of the body 124 and the outer shell 12 of the cartridge 10 by one of the opposed recesses 24,26 in the bottom part 14 according to the orientation of the cartridge 10 in the body 124. The recesses 24,26 provide axially extending waterways that communicate with the outlet port 78 at the rear end of the cartridge 10 and define an outlet chamber 194 sealed by engagement of the circumferential O-ring 32 with the cylindrical wall 156 of the body 124.

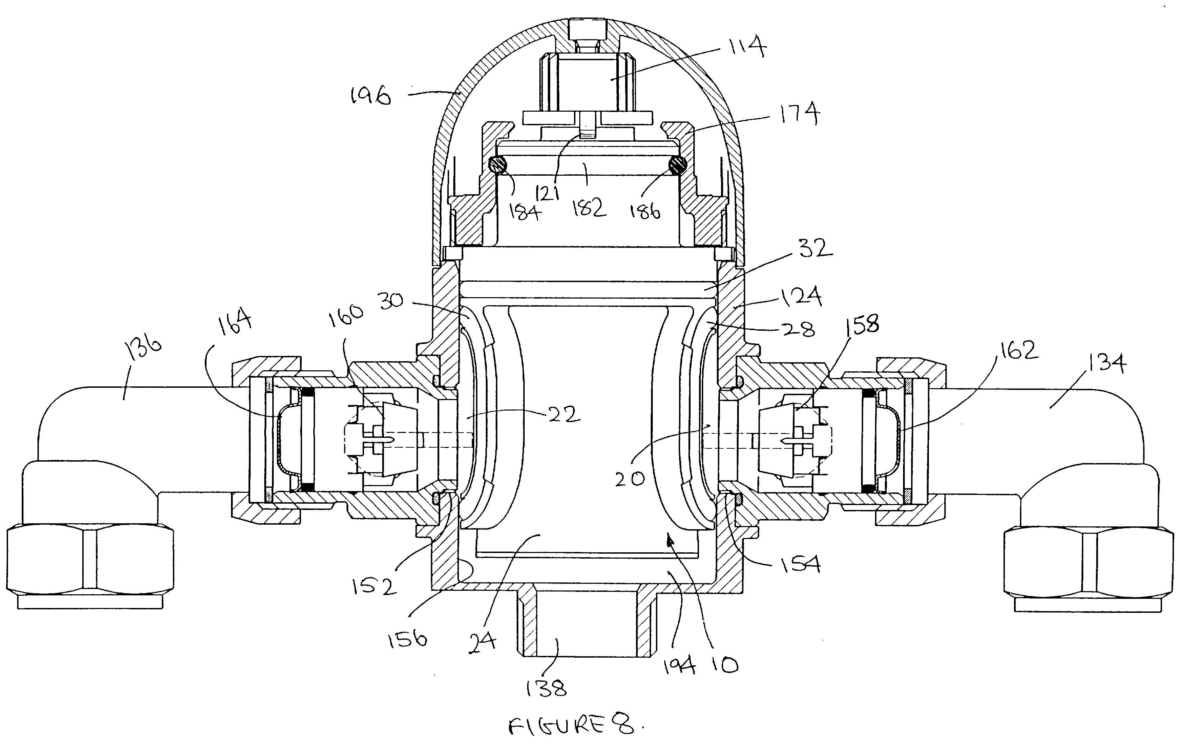

By this feature of the opposed recesses 24,26 in the cartridge shell 12 providing waterways between the cartridge 10 and mixer body 124, the position of the outlet 138 in the body 124 may be altered for different installations without changing the cartridge 10. For example, Figure 8 shows a second embodiment generally similar to the first embodiment with like reference numerals being used to indicate corresponding parts wherein the body 124 of the mixer 126 has opposed hot and cold water inlets 152,154 in the cylindrical wall 156 that align with the inlet ports 20,22 of the cartridge 10 fitted in the body 124, and the water outlet 138 is provided in the end wall 130 and opens into the outlet chamber 194 defined between the cartridge 10 and the body 124. In addition, the required water temperature of the mixer 126 is set during installation and a locking shroud 196 is fitted to the front end of the body 124 to prevent adjustment of the water temperature by the user.

It will be appreciated that the opposed recesses in the cartridge shell eliminate the need for casting cores in the mixer body which, being basically cylindrical, is an easy shape to produce and adapt for different installations by changing the position of the outlet. For example, the body may be machined from solid bar using the same tooling for common features. Alternatively, the body may be a casting.

It will also be appreciated that the number, size and position of the recesses provided in the cartridge shell may be varied according to the relative positions of the outlet port and the outlet in the mixer body for different applications. Thus, one or more axially and/or circumferentially extending recesses may be formed in the cartridge shell as desired.

Furthermore, the position of the inlet ports formed in the cartridge shell may be altered to suit the position of the inlets in the mixer body. Thus, the cartridge may have opposed inlet ports for fitting the cartridge in either one of two positions as described or any other arrangement of the inlet ports as desired.

The inlet ports and inlets may be formed in co-operating parts of the cartridge shell and mixer body of generally cylindrical shape as described or any other suitable shape.

Also, the operating mechanism within the cartridge for controlling mixing of the hot and cold water supplies may be of any suitable type. For example, mechanisms providing a combination of thermostatic and non-thermostatic control of water temperature as described or mechanisms providing either thermostatic or non-thermostatic control of water temperature may be employed as desired.

## Claims

1. A mixer (126) comprising a body (124) having hot and cold water inlets (152,154) for connection to hot and cold water supplies respectively and a mixed water outlet (138), and a cartridge (10) received in the body (124), the cartridge (10) having hot and cold water inlet ports (20,22) in communication with the hot and cold water inlets (152,154) respectively of the body (124) and a mixed water outlet port (78) which is in communication with the mixed water outlet (138) of the body (124) through an outlet chamber (194) characterised in that the outlet chamber (194) is defined by axial and radial clearance between the cartridge (10) and side and end walls (156,130) of the body (124).

2. A mixer according to Claim 1 characterised in that the mixed water outlet port (78) of the cartridge (10) is spaced from and faces the end wall (130) of the body (124).

3. A mixer according to Claim 1 or Claim 2 characterised in that the mixed water outlet (138) of the body (124) is provided in the end wall (130) of the body (124).

4. A mixer according to Claim 1 or Claim 2 characterised in that the mixed water outlet (138) of the body (124) is provided in the side wall (156) of the body (124).

5. A mixer according to any one of the preceding Claims characterised in that the cartridge (10) is spaced from the end wall (130) of the body (124) providing axial clearance and is spaced from the side wall (156) of the body (124) between the hot and cold water inlet ports (20,22) providing radial clearance.

6. A mixer according to any one of the preceding Claims characterised in that the body (124) has a bore (156) of circular cross-section for reception of the cartridge (10) with an annular seal (32) between the cartridge (10) and the body (124) at the open end of the bore (156).

7. A mixer according to any one of the preceding Claims characterised in that the hot and cold water inlets (20,22) of the cartridge (10) are of increased size relative to the hot and cold water inlets (152,154) of the body (124), and preferably include seals (28,30) for engagement with the body (124).

8. A mixer according to any one of the preceding Claims characterised in that the cartridge (10) and body (124) have co-operating formations (42,44;170,172) for locating the cartridge (10) in a selected one of two opposed positions for reversing the inlet connections to the hot and cold supplies.

9. A mixer according to any one of the preceding Claims characterised in that the cartridge (10) is secured in the body (124) by releasable retainer means (174) optionally connectable to the cartridge (10) by coupling means (188) to assist removal of the cartridge (10) from the body (124) when the retainer means (174) is released.

10. A mixer according to Claim 9 characterised in that the retainer means (174) is threadably engageable with the body (124) and the coupling means (188) allows relative rotation between the retainer means (174) and the cartridge (10) whereby an axial force is applied to the cartridge (10) to assist removal of the cartridge (10) from the body (124) when the retainer means (174) is released, and the coupling means (188) is preferably detachable for disconnecting the retainer means (174) and cartridge (10).

11. A mixer according to any one of the preceding Claims characterised in that a proportioning valve (34), preferably a shuttle (34) arranged for axial movement between hot and cold seats (36,38), is provided for controlling the relative proportions of hot and cold water admitted to a mixing chamber (40) in accordance with adjustable selection of the mixed water temperature.

12. A mixer according to Claim 11 characterised in that a thermostat (70) responsive to temperature of water in the mixing chamber (40) is provided to adjust the proportioning valve (34) to maintain constant the selected mixed water temperature, and the thermostat (70) is preferably isolated for adjustable selection of the mixed water temperature below a pre-determined value.

13. A mixer according to Claim 11 or Claim 12 characterised in that the proportioning valve (34) is actuated by drive means (90) for adjustable selection of the mixed water temperature, and the drive means (90) is preferably arranged to be disconnected at an upper limit of adjustment.

## Patentansprüche

1. Mischer (126) mit einem Gehäuse (124), welches Heiß- und Kaltwassereinlässe (152, 154) zum Anschluß an Heiß- und Kaltwasserversorgungsleitungen und einen Mischwasserauslaß (138) aufweist, wobei eine Kartusche (10) in dem Gehäuse (124) aufgenommen ist und die Kartusche (10) Heiß- und Kaltwassereinlaßöffnungen (20, 22) in Verbindung mit den Heiß- und Kaltwassereinlässen (152 bzw. 154) des Gehäuses (124) und eine Mischwasserauslaßöffnung (78) aufweist, welche mit dem Mischwasserauslaß (138) des Gehäuses (124) durch eine Auslaßkammer (194) in Verbindung steht, dadurch gekennzeichnet, daß die Auslaßkammer (194) durch einen axialen und radialen Freiraum zwischen der Kartusche (10) und Seiten- und Endwandungen (156, 130) des Gehäuses (124) gebildet ist.

2. Mischer nach Anspruch 1, dadurch gekennzeichnet, daß die Mischwasserauslaßöffnung (78) der Kartusche (10) im Abstand von der Endwandung (130, 124) auf diese zuweisend angeordnet ist.

3. Mischer nach Anspruch 1 oder Anspruch 2, dadurch gekennzeichnet, daß der Mischwasserauslaß (138) des Gehäuses (124) in der Endwandung (130) des Gehäuses (1214) ausgebildet ist.

4. Mischer nach Anspruch 1 oder Anspruch 2, dadurch gekennzeichnet, daß der Mischwasserauslaß (138) des Gehäuses (124) in der Seitenwandung (156) des Gehäuses (124) ausgebildet ist.

5. Mischer nach einem der vorstehenden Ansprüche, dadurch gekennzeichnet, daß die Kartusche (10) im Abstand von der Endwandung (130) des Gehäuses (124) angeordnet ist und einen axialen Abstand bildet und von der Seitenwandung (156) des Gehäuses (124) zwischen den Heiß- und Kaltwassereinlaßöffnungen (20, 22) ebenfalls im Abstand angeordnet ist und einen radialen Zwischenraum bildet.

6. Mischer nach einem der vorstehenden Ansprüche, dadurch gekennzeichnet, daß das Gehäuse (124) eine Bohrung (156) kreisförmigen Querschnitts zur Aufnahme der Kartusche (10) mit einer ringförmigen Dichtung zwischen der Kartusche (10) und dem Gehäuse (124) an dem offenen Ende der Bohrung (156) aufweist.

7. Mischer nach einem der vorstehenden Ansprüche, dadurch gekennzeichnet, daß die Heiß- und Kaltwassereinlässe (20, 22) der Kartusche (10) im Vergleich mit den Heiß- und Kaltwassereinlässen (152, 154) des Gehäuses (124) ein vergrößertes Maß aufweisen, und vorzugsweise Dichtungen (28, 30) zum Eingriff mit dem Gehäuse (124) aufweisen.

8. Mischer nach einem der vorstehenden Ansprüche, dadurch gekennzeichnet, daß die Kartusche (10) und das Gehäuse (124) zusammenarbeitende Formationen (42, 44; 170, 172) zur örtlichen Festlegung der Kartusche (10) in einer von zwei entgegengesetzten Positionen aufweist, um die Einlaßanschlüsse der Heiß- und Kaltwasserversorgung umzukehren.

9. Mischer nach einem der vorstehenden Ansprüche, dadurch gekennzeichnet, daß die Kartusche (10) in dem Gehäuse (124) durch lösbare Halteeinrichtungen (174) befestigt sind, welche durch Kupplungseinrichtungen (188) wahlweise mit der Kartusche (10) verbindbar sind, um das Entfernen der Kartusche (10) aus dem Gehäuse (124) zu unterstützen, wenn die Halteeinrichtungen (174) gelöst sind.

10. Mischer nach Anspruch 9, dadurch gekennzeichnet, daß die Halteeinrichtungen (174) mit dem Gehäuse (124) in gewindemäßigen Eingriff bringbar sind, und daß die Kupplungseinrichtung (188) eine Relativdrehung zwischen den Halteeinrichtungen (174) und der Kartusche (10) erlaubt, wodurch eine Axialkraft auf die Kartusche (10) ausgeübt wird, um das Entfernen der Kartusche (10) aus dem Gehäuse (124) zu unterstützen, wenn die Halteeinrichtung (174) gelöst ist, wobei die Kupplungseinrichtung (188) vorzugsweise abnehmbar ist, um die Halteeinrichtung (174) und die Kartusche (10) voneinander zu trennen.

11. Mischer nach einem der vorstehenden Ansprüche, dadurch gekennzeichnet, daß ein Proportionierungsventil (34), vorzugsweise in Schiffchen (34), axial zwischen Heiß- und Kaltwassersitzen (36, 38) beweglich angeordnet vorgesehen ist, um die relativen Anteile von heißem und kaltem Wasser zu steuern, welches in eine Mischkammer (4) entsprechend einer einstellbaren Wahl der gemischten Wassertemperatur einleitbar ist.

12. Mischer nach Anspruch 11, dadurch gekennzeichnet, daß ein Thermostat (70), der auf die Wassertemperatur in der Mischkammer (40) anspricht, vorgesehen ist, um das Proportionierungsventil (34) einzustellen, um dadurch die gewählte Mischwassertemperatur konstant zu halten, und daß der Thermostat (70) vorzugsweise für eine einstellbare Wahl der Mischwassertemperatur unter einem vorbestimmten Wert isoliert ist.

13. Mischer nach Anspruch 11 oder 12, dadurch gekennzeichnet, daß das Proportionierungsventil (34) durch Antriebseinrichtungen (90) betätigbar ist, um eine einstellbare Wahl der Mischwassertemperatur zu ermöglichen, und daß die Antriebseinrichtung (90) vorzugsweise derart angeordnet ist, daß sie an einem oberen Grenzwert der Einstellung getrennt wird.

## Revendications

1. Robinet mélangeur (126) comprenant un corps (124) avec des entrées d'eau chaude et froide (152, 154) pour la connexion à des alimentations d'eau chaude et froide, respectivement, et une sortie d'eau mélangée (138), et une cartouche (10) reçue dans le corps (124), la cartouche (10) ayant des orifices d'entrée d'eau chaude et froide (20, 22) en communication avec les entrées d'eau chaude et froide (152, 154), respectivement, du corps (124) et un orifice de sortie d'eau mélangée (78) qui est en communication avec la sortie d'eau mélangée (138) du corps (124) par une chambre de sortie (194), caractérisé en ce que la chambre de sortie (194) est définie par un jeu axial et radial entre la cartouche (10) et les parois latérales et d'extrémité (156, 130) du corps (124).

2. Robinet mélangeur selon la revendication 1, caractérisé en ce que l'orifice de sortie d'eau mélangée (78) de la cartouche (10) est espacée de et est orientée vers la paroi d'extrémité (130) du corps (124).

3. Robinet mélangeur selon la revendication 1 ou la revendication 2, caractérisé en ce que la sortie d'eau mélangée (138) du corps (124) est réalisée dans la paroi d'extrémité (130) du corps (124).

4. Robinet mélangeur selon la revendication 1 ou la revendication 2, caractérisé en ce que la sortie d'eau mélangée (138) du corps (124) est réalisée dans la paroi latérale (156) du corps (124).

5. Robinet mélangeur selon l'une des revendications précédentes, caractérisé en ce que la cartouche (10) est espacée de la paroi d'extrémité (130) du corps (124) en réalisant un jeu axial et qu'elle est espacée de la paroi latérale (156) du corps (124) entre les orifices d'entrée d'eau chaude et froide (20, 22) en réalisant un jeu radial.

6. Robinet mélangeur selon l'une des revendications précédentes, caractérisé en ce que le corps (124) a un perçage (156) d'une section transversale circulaire pour recevoir la cartouche (10), avec un joint d'étanchéité annulaire (32) entre la cartouche (10) et le corps (124) à l'extrémité ouverte du perçage (156).

7. Robinet mélangeur selon l'une des revendications précédentes, caractérisé en ce que les entrées d'eau chaude et froide (20, 22) de la cartouche (10) sont d'une taille plus grande par rapport aux entrées d'eau chaude et froide (152, 154) du corps (124) et comprennent de préférence des joints d'étanchéité (28, 30) pour la mise en prise avec le corps (124).

8. Robinet mélangeur selon l'une des revendications précédentes, caractérisé en ce que le chariot (10) et le corps (124) ont des formations coopérantes (42, 44 ; 170, 172) pour localiser la cartouche (10) dans une position choisie parmi deux positions opposées pour inverser les connections d'entrée aux amenées d'eau chaude et froide.

9. Robinet mélangeur selon l'une des revendications précédentes, caractérisé en ce que la cartouche (10) est fixée dans le corps (124) par un moyen de retenue détachable (174) pouvant être connecté en option à la cartouche (10) par un moyen d'accouplement (188) pour contribuer au retrait de la cartouche (10) du corps (124) lorsque le moyen de retenue (174) est libéré

10. Robinet mélangeur selon la revendication 9, caractérisé en ce que le moyen de retenue (174) peut être mis en prise de filetage avec le corps (124), et que le moyen d'accouplement (188) permet une rotation relative entre le moyen de retenue (174) et la cartouche (10), par quoi une force axiale est appliquée à la cartouche (10) pour contribuer au retrait de la cartouche (10) du corps (124) lorsque le moyen de retenue (174) est libéré, et le moyen d'accouplement (188) est de préférence détachable pour déconnecter le moyen de retenue (174) et la cartouche (10).

11. Robinet mélangeur selon l'une des revendications précédentes, caractérisé en ce qu'une vanne proportionnelle (34), de préférence une vanne à clapet (34) agencée en vue d'un mouvement axial entre des sièges chaud et froid (36, 38) est prévue pour contrôler les proportions relatives d'eau chaude et froide admises à la chambre de mélange (40) en accord avec une sélection réglable de la température de l'eau mélangée.

12. Robinet mélangeur selon la revendication 11, caractérisé en ce qu'un thermostat (70) réagissant à la température de l'eau dans la chambre de mélange (40) est prévu pour régler la vanne proportionnelle (34) afin de maintenir la température choisie pour l'eau mélangée à un niveau constant, et le thermostat (70) est de préférence isolé pour une sélection réglable de la température de l'eau mélangée en dessous d'une valeur prédéterminée.

13. Robinet mélangeur selon la revendication 11 ou la revendication 12, caractérisé en ce que la vanne proportionnelle (34) est actionnée par un moyen d'entraînement (90) pour une sélection réglable de la température de l'eau mélangée, et le moyen d'entraînement (90) est de préférence agencé pour être déconnecté à une limite de réglage supérieure.
